# EUROPEAN PATENT APPLICATION

(11) **EP 2 457 652 A1**
(43) Date of publication of application: **30.05.2012**
(21) Application number: 11190326.6
(22) Date of filing: 23.11.2011
(51) Int. Cl.: B01J 20/285, B01J 20/282, B01J 20/28, B82Y 30/00, D01D 5/00, D01F 6/00

(54) **Chromatographic substrate for thin-layer chromatography and chromatographic substrate for column chromatography**

(30) Priority: 24.11.2010 CZ 20100859
(71) Applicant: Technicka Univerzita v Liberci, 461 17 Liberec (CZ)
(72) Inventor: Wiener, Jakub, 46001 Liberec (CZ)
(74) Representative: Musil, Dobroslav

(57) **Abstract**

The present invention relates to a chromatographic substrate for thin-layer chromatography containig a layer of porous polymeric nanofibres, either separately or applied on a carrying layer of suitable material.

Further, the invention concerns chromatographic substrate for column chromatography comprising a self-supporting layer of porous polymeric nanofibres twisted into the shape of cylinder with required diameter, a layer of porous polymeric nanofibres applied on a carrying layer, whereas both layers are twisted together into the shape of cylinder with required diameter, or contains fragments and/or neps of such layer/layers.

## Description

### Technical field

The present invention relates to a chromatographic substrate for thin-layer chromatography.

The present invention also relates to a chromatographic substrate for column chromatography.

### Background art

At present, special types of paper (paper chromatography) or layers of suitable substances (e.g. cellulose, silica gel, aluminum oxide etc.) applied on a suitable carrier (e.g. glass, plastic, metal foil) are especially used as substrates for thin-layer chromatography. The substrates used for column chromatography are layers, respectively columns, of microparticles and/or nanoparticles of various materials (usually also silica gel and aluminum oxide, less often cellulose).

Disadvantage of these substrates is namely their rather time-consuming preparation, which includes choice of suitable material and requires some expertise and skills from the service staff.. Specific disadvantage of substrates for column chromatography is their uneven inner structure because industrially produced microparticles and/or nanoparticles have no constant size and shape. In some cases these disadvantages may lead to distorted or deteriorated chromatography results.

The goal of the present invention is to design a new chromatographic substrate usable for thin-layer chromatography as well as column chromatography which would remove the disadvantages of prior art.

### Principle of the invention

The goal of the invention has been solved by a chromatographic substrate for thin-layer chromatography containing a layer of porous polymeric nanofibres which can be prepared quickly and cheaply to meet specific requirements.

Depending on conditions of use, this chromatographic substrate contains either a self-supporting layer of porous polymeric nanofibres or a layer of porous polymeric nanofibres applied on an inert carrying layer or on a layer of hydrophilic material.

The goal of the invention has been also solved by a chromatographic substrate for column chromatography comprising a self-supporting layer of porous polymeric nanofibres twisted into the shape of a cylinder with diameter required according to the dimensions of the chromatographic column, or a layer of porous polymeric nanofibres applied on a carrying layer of hydrophilic material, whereas both layers are together twisted into the shape of a cylinder with required diameter.

In other versions the chromatographic substrate for column chromatography contains fragments and/or neps of layer of porous polymeric nanofibres, eventually fragments and/or neps of layer of hydrophilic material with applied layer of porous polymeric nanofibres.

The hydrophilic carrying layer is advantageously the layer of chromatographic paper.

For some applications it is also convenient if among the porous polymeric nanofibres, nanoparticles and/or microparticles of at least one substance from the group including pigments, fluorescent pigments, UV-fluorescent pigments, hydrophilic substances which improve the applicability of the substrate and/or facilitate and/or extend its use, are embedded. In other versions, these substances are built-in directly in the structure of porous polymeric nanofibres or are covalently linked to them.

To enhance the effectivity, hydrophilic and/or polar groups are covalently linked to the porous polymeric nanofibres.

For example polyamide and polysaccharide are, thanks to their properties, suitable materials for porous polymeric nanofibres.

### Examples of embodiment

The chromatographic substrate according to the invention consists of a planar layer of porous polymeric nanofibres, or comprises such a layer as one of its components. A suitable layer of polymeric nanofibres is advantageously prepared by electrostatic spinning of polymer matrix (polymer solution or melt), whereas high evenness within its whole volume is for example reached by usage of a cylinder-shaped spinning electrode according to EP patent no. 1673493, or a string-shaped electrode according to EP application no. 2059630, EP application no. 2173930 or CZ application no. 2009-525. For most of considered applications, it is at the same time convenient, if this layer is prepared as self-supporting through a suitable choice of conditions of electrostatic spinning and/or material of nanofibres and/or their diameter and/or thickness of the layer and/or other parameters and/or subsequent processing, so it can be used independently of any other carrying layer. For other applications it is on contrary more convenient if the layer of nanofibres is applied on a carrying layer from suitable hydrophilic material, for example a layer of paper used presently for paper chromatography etc. Apart from that, the layer of nanofibres may be applied on non-hydrophilic carrying layer, for example on a glass plate, plastic or metal foil.

The preparation of porous polymeric nanofibres by electrostatic spinning is described for example in CN 101586256.

The layer of porous polymeric nanofibres prepared by electrostatic spinning has excellent sorption properties thanks to the large specific surface of porous nanofibres and its even structure enables an even penetration of liquid sample during chromatography. Particular components of the sample are being captured, based on their absorption properties and/or the values of distribution coefficients and/or dimensions of their molecules and/or electric charges in pores of polymeric nanofibres, and after being washed (eluted) these components, and if appropriate also their quantities, are identified in the same manner and with the same equipment as if usual chromatographic substrates were used.

The layer of porous polymeric nanofibres, particularly when it is made as self-supporting, has many advantages compared to prior art chromatographic substrates (a layer of microparticles and/or nanoparticles, paper, gel etc.). They especially include advantageous mechanic properties enabling to re-use the layer even by the chromatography under elevated pressure and/or abrasion, without breaking its even structure. Another substantial advantage consists in the possibility to create quickly and cheaply a layer of nanofibres according to particular requirements, whereas for any course of chromatography it is possible to create a layer with required thickness and/or diameter of nanofibres, or with required distribution of pores, what may accelerate and/or improve the process of chromatography of given sample. Apart from that, the properties of layer of porous polymeric nanofibres and/or its behavior in contact with the sample can be further modified by using suitable fillers which are inserted into the polymer matrix before electrostatic spinning and which are built-in into the created nanofibres during the electrostatic spinning, or, which are linked to already created nanofibres through suitable chemical bonds, namely through covalent bonds. Basically, any substance, or its precursor, can be used as filler which will, by its presence in the material of nanofibres, modify their mechanic and/or chemical properties and/or give them a specific property as required. Suitable fillers are for example pigments, fluorescent pigments or substances with fluorescent properties under UV radiation (UV-fluorescent pigments), etc., which can serve to visualize the results of chromatography, respectively to determine the presence/absence of particular component in the sample and/or to express the operational life of chromatographic substrate, etc. Other suitable fillers include substances enhancing hydrophilic properties of nanofibres, and thus the wettability of the layer of nanofibres by liquid sample. Individually or in combination with usage of these fillers, it is further possible to impregnate already prepared layer of nanofibres with suitable substances with required effect, and/or to insert nanoparticles and/or microparticles of such substances or their precursors into inter-fibre spaces, and/or to modify their properties through plasma modification during which functional, namely polar and/or hydrophilic groups, are linked to the surface of porous polymeric nanofibres. Plasma modification is advantageously carried out using the method described in CZ patent no. 300574, or in the analogous international application WO 02095115 (Ćernák M.). To get a layer of nanofibres with particularly required properties, it is possible to combine all, or at least some, of the modifications mentioned above, in a suitable manner.

Basically, any polymer spinnable through electrostatic spinning can be used as the material of porous polymeric nanofibres of the planar layer, whereas its properties may be conformed to particular requirements using any of modifications mentioned above. During experiments, the usage of polyamides which have excellent resistance to most organic solvents, or polysaccharides which show high absorbing capacity, proved best.

The prepared layer of porous polymeric nanofibres is used separately or in combination with a layer of suitable material, whereas in the case of thin-layer chromatography it is used in its planar form, and in the case of column chromatography it is twisted into a cylinder formation which is inserted in the chromatographic column, in some cases it is previously transformed into a quantity of fragments and/or neps which fill the required part of the chromatographic column. In some applications, it is advantageous to combine suitably some of these alternatives when using more planar layers of porous polymeric nanofibres, what enables to utilize suitable properties of different materials of nanofibres and/or their modifications. Apart from that, it is possible to combine at least one layer of porous polymeric nanofibres with some of so far generally used chromatographic substrates.

## Claims

1. A chromatographic substrate for thin-layer chromatography, **characterized in that** it contains a layer of porous polymeric nanofibres.

2. The chromatographic substrate according to claim 1, **characterized in that** the layer of porous polymeric nanofibres is self-supporting.

3. The chromatographic substrate according to claim 1, **characterized in that** the layer of porous polymeric nanofibres is applied on a carrying layer from the group comprising glass plate, plastic foil, metal foil.

4. The chromatographic substrate according to claim 1, **characterized in that** the layer of porous polymeric nanofibres is applied on a carrying layer of hydrophilic material.

5. A chromatographic substrate for column chromatography, **characterized in that** it is composed of self-supporting layer of porous polymeric nanofibres twisted into shape of cylinder of required diameter.

6. A chromatographic substrate for column chromatography, **characterized in that** it is composed of layer of porous polymeric nanofibres applied on a carrying layer of hydrophilic material, whereas both layers are together twisted into shape of cylinder of required diameter.

7. A chromatographic substrate for column chromatography, **characterized in that** it contains fragments and/or neps of layer of porous polymeric nanofibres.

8. A chromatographic substrate for column chromatography, **characterized in that** it contains fragments and/or neps of carrying layer of hydrophilic material with applied layer of porous polymeric nanofibres.

9. The chromatographic substrate according to any of claims 4, 6 or 8 **characterized in that** the carrying layer is layer of chromatographic paper.

10. The chromatographic substrate according to any of previous claims **characterized in that** there are nanoparticles and/or microparticles of at least one substance from group including pigments, fluorescent pigments, UV-fluorescent pigments, hydrophilic substances, embedded among porous polymeric nanofibres.

11. The chromatographic substrate according to any of previous claims **characterized in that** the porous polymeric nanofibres comprise in their structure at least one substance from the group including pigments, fluorescent pigments, UV-fluorescent pigments, hydrophilic substances.

12. The chromatographic substrate according to any of previous claims **characterized in that** to the porous polymeric nanofibres is covalently linked at least one substance from the group including pigments, fluorescent pigments, UV-fluorescent pigments, hydrophilic substances.

13. The chromatographic substrate according to any of previous claims **characterized in that** to the porous polymeric nanofibres are covalently linked hydrophilic and/or polar groups.

14. The chromatographic substrate according to any of previous claims **characterized in that** the porous polymeric nanofibres are made of polyamide.

15. The chromatographic substrate according to any of claims 1 to 13 **characterized in that** the porous polymeric nanofibres are made of polysaccharide.
